# EUROPEAN PATENT SPECIFICATION

(11) **EP 1 120 027 B1**
(45) Date of publication and mention of the grant of the patent: **23.11.2005**
(21) Application number: 01200257.2
(22) Date of filing: 25.01.2001
(51) Int. Cl.: A01D 41/12

(54) **Turret system on a bubble-up auger for an agricultural combine**
Turmsystem für Förderschnecke eines Mähdreschers
Système à tourelle pour vis sans fin de moissonneuse-batteuse

(30) Priority: 27.01.2000 US 492234
(43) Date of publication of application: 01.08.2001
(73) Proprietor: CNH Belgium N.V., 8210 Zedelgem (BE)
(72) Inventor: Rayfield, James F., New Holland, PA 17557 (US); Bich, Gary L., New Holland, PA 17557 (US)
(74) Representative: Vandenbroucke, Alberic

(56) References cited:
- BE-A- 742 766
- DE-A- 2 036 301
- DE-A- 3 827 277
- DE-A- 4 419 435
- DE-B- 1 155 933
- FR-A- 1 488 605
- US-A- 4 029 228

## Description

This invention relates to an improvement of the intermediate grain storage on an agricultural harvesting machine. More specifically it relates to a bubble-up auger for use in a grain tank.

Mechanical harvesting of grain has taken place for decades. However, efforts continue in the attempt to make harvesting operations more efficient and effective. A combine harvester generally includes a header, which cuts the crop. The header then moves the cut crop into a feeder house, which lifts the cut crop into the threshing, separation and cleaning areas of the combine. The grain is loosened from the stalk by a rotor or cylinder threshing system. The grain is then separated and moved and stored in an intermediate container or grain tank. The chaff and trash are deposited from the rear of the combine. The grain stored in the grain tank is eventually discharged through a grain tank unload tube. An operator usually runs these various operations from a glass-enclosed cab. Typically, the cab is located above and behind the header and feederhouse. There are a variety of agricultural combine harvesters and their operations are well known in the art. For examples of such harvesters, reference is made to US-A-4,846,198 which illustrates the conventional and twin rotor threshing and separating systems of a harvester as well as other major systems of the harvester. See also the New Holland Super Conventional Combines TX™66, TX™68, the New Holland TWIN ROTOR® combines TR®89 and TR®99 for examples of existing conventional and axial flow harvesters. US-A-4,332,262 also illustrates the primary systems of a conventional harvester. For further details regarding various agricultural harvester systems review US-A-4,522,553, US-A-4,800,711, US-A-4,866,920, US-A-4,907,402, US-A-4,967,544 and US-A-5,155,984. See also the New Holland corn head model 996 and the New Holland grain belt header model 994 for details regarding headers.

As previously alluded to, the processed grain enters the grain tank from the separating and cleaning system by means of a clean grain elevator. How the grain has been conveyed into the grain tank has gradually evolved driven by several factors. Originally, the clean grain entered the tank from the base of the tank. Of course as the pile of grain increased, the force needed to push more grain into the grain tank increased. This damaged the grain when the pile became too heavy. To alleviate this problem, a grain tank auger was introduced. Basically, the grain tank auger would lift and deposit the grain from the clean grain elevator to the top of the grain tank. The next improvement involved the creation of the bubble up auger. The bubble-up auger allowed for even more grain to be piled into the centre of the grain tank. The bubble-up auger was typically spring biased or hydraulically driven and would constantly be rising above the pile of grain. However, grain tank sizes are increasing so much that a bubble up auger could rise quite high above the sides of the combine. This creates transport difficulties because the total height of the combine could increase to the point where the bubble-up auger would protrude above the combine contrary to various national and international transport regulations.

The prior art illustrates these drawbacks. US-A-4,008,819 illustrates a self-raising bin loading auger for combines or a conventional spring-biased bubble-up auger. US-A-4,106,649 illustrates a floating grain bin extension for use with agricultural combine or a bubble-up auger for an even larger grain tank. US-A-Re 24,920 illustrates a grain bin unloading system. US-A-2,885,129 illustrates a gearbox and transition region positioned at the base of the a grain auger. US-A-4,029,228 illustrates another spring biased bubble-up auger. US-A-5,695,398 illustrates a folding loading auger. This single grain-loading auger is hydraulically raised and then latched into position prior to operating. Once the grain tank is full, the auger remains in an upright position creating transport issues. US-A-2.481,860 shows a spring biased grain tank unloading system. US-A-4,662,812 shows a bin unloader with an oblique pivot axis. Movable bubble-up auger typically have a hinge area between the stationary and movable portions. This area has to be sealed to avoid the return of kernels from the grain tank into the bubble-up assembly. Such seals can be optimised for one position of the auger, e.g. when fully extended, but usually provide for some leakage in the other, intermediate positions.

It is an object of the present invention to provide for a bubble-up assembly which is movable between an operative and a transport position and remedies to the drawbacks indicated above.

According to the invention there is provided an agricultural harvesting machine comprising:
means for processing crop collected from a field;
a tank for intermediate storage of processed crop material; and
conveyor means for conveying processed crop material from said processing means to said tank;
said conveyor means comprising:
   - a stationary lower auger assembly comprising lower auger flighting mounted for rotation inside lower auger shielding;
   - a movable upper auger assembly comprising upper auger flighting mounted for rotation inside upper auger shielding for discharging said processed crop material into said tank; and
   - means for rotating said upper auger assembly relative to said lower auger assembly about a rotation axis that lies in a plane extending through the axis of said lower auger flighting, said rotation axis intersecting or coinciding with said lower flighting axis,
characterised in that said rotating means comprise a turret system comprising:
a lower auger collar affixed to said lower auger assembly; and
an upper auger collar affixed to said upper auger assembly, proximate to said lower auger collar and oriented in a plane that is perpendicular to said rotation axis and oblique relative to the upper auger shielding.

Such auger is capable of being pivoted downwardly below the top level of the grain tank to allow for easy transport. As the upper auger assembly is rotated, this allows the top of the auger to be positioned in a variety of locations within the grain tank.

The rotating means comprise a turret system. Such embodiment is compact in volume, which is particularly advantageous when used inside a grain tank. It may be installed easily in an existing combine harvester. Such turret system may comprise one or more roller assemblies affixed to a collar on the upper or lower auger assembly and being in slideable contact with a collar on the other auger assembly. The roller assemblies hold the collars proximate to each other while allowing rotation relative to each other.

The upper auger section may be pivotally manually, e.g. by means of a handle, or motor means may be provided for rotation by the operator in the cab of the harvester. Locking means, e.g. a spring-biased pin inserted through the upper and lower auger collars, can be used to secure the upper auger assembly in the operative or transport position. The operator may then raise the pin and rotate the upper auger assembly manually into the appropriate position. The pin is then urged by the spring into a hole, thereby locking the upper assembly into position.

A hydraulic or an electric motor assembly may rotate the upper auger assembly. A switch-controlled electric motor may be used to rotate a worm gear, which meshes with a series of collar teeth positioned on the periphery of an auger collar. The upper auger collar is rotated to the appropriate position as desired by controlling the switch.

The lower auger assembly or a transition to this lower auger may provide room for the attachment of a yield monitoring system.

An embodiment of the present invention will now be described in further detail, by way of example, with reference to the accompanying drawings, in which:
Figure 1 is a schematic side elevational view of a combine with structure broken away to reveal the inside of the grain tank;
Figure 2 is an enlarged vertical sectional view of the structure visible within the grain tank in Figure 1, showing upper and lower auger assemblies;
Figure 3 is a sectional view perpendicular to the auger collars showing a roller assembly and an electric motor assembly taken on line 3-3 of Figure 2;
Figure 4 is a view similar to Figure 3, but showing the manual turning means embodiment;
Figure 5 is a detailed sectional view of the roller assembly taken on the line 5-5 of Figure 3 and shown in larger scale; and
Figure 6 is a detailed sectional view of a pin and a pin bracket taken on the line 6-6 of Figure 3 and drawn to a larger scale.

Referring to the drawings, it is possible to observe the major elements and general operation of the present invention. Left and right references are used as a matter of convenience and are determined by standing at the rear of the combine and facing the forward end in the normal direction of travel. Likewise, forward and rearward are determined by normal direction of travel of the combine. Arrow D defines the typical forward direction of travel. Upward or downward orientations are relative to the ground or operating surface. Horizontal or vertical planes are also relative to ground.

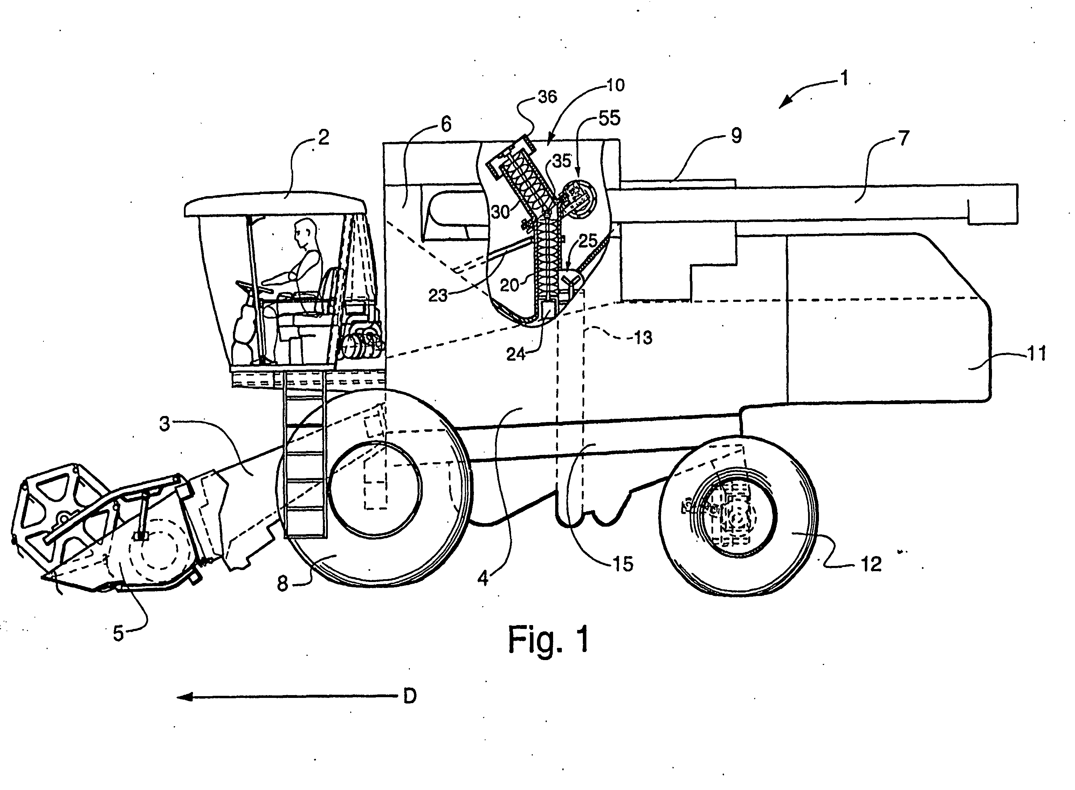

Figure 1 shows a typical combine 1 having a pair of front wheels 8 (only one shown) and a pair of rear wheels 12 (only one shown) mounted to a main frame 15 for providing movement over the ground. At the front of the combine is a header 5 for cutting a crop. As the combine 1 and header 5 are moved forward, the header cuts the grain and stalk. The header 5 moves the grain into its auger trough. A transverse auger pushes the grain and stalk in the auger trough to the centre of the header. The header may be positioned and re-positioned relative to the ground. The header may also be tilted to the left or right or may be positioned relatively high or low to the ground. These features are constantly being adjusted depending on the terrain and crop conditions. Moveable headers are well known and established in the art. Located at the rear centre of the header is the feederhouse 3 or elevator. The feederhouse 3 moves the grain and stalks rearward into the threshing, separation and cleaning systems 4 of the combine 1. There are a variety of different threshing, separation and cleaning systems 4 which are numerous and well known by those skilled in the art. After processing, separation and cleaning, the grain is transported by a clean grain elevator 13 upwards and dumped into the clean grain transition 25. A turret system 10 lifts the clean grain from the clean grain transition 25 and deposits the grain at the top of a grain tank 6 located near the top of the combine 1. At intervals, the grain is transferred from the grain tank 6 to a transport vehicle by an unload auger tube 7. Usually during the harvesting operations, the unloading auger remains undriven and the grain tank unload auger tube 7 remains retracted as shown in Figure 1. However, the combine can be unloaded 'on the go'. A separate vehicle such as a truck or tractor-pulled grain cart drives beside the moving combine. The processed grain is discharged while the combine and receiving vehicle are moving. The trash or chaff is ejected from the rear of the combine by a chaff spreader at the rear 11 of the combine 1. The operator controls the combine 1 from the cab 2 located behind the header and at the front of the combine. From the cab 2 the operator can observe most of the various combine functions. The cab 2 usually has a large glass window or several windows which afford the operator the maximum ability to monitor the header 5. The combine 1 and various systems are powered by an engine 9 generally positioned at the rear of the combine 1. Most of the major systems in a combine are discussed and well known in the prior art.

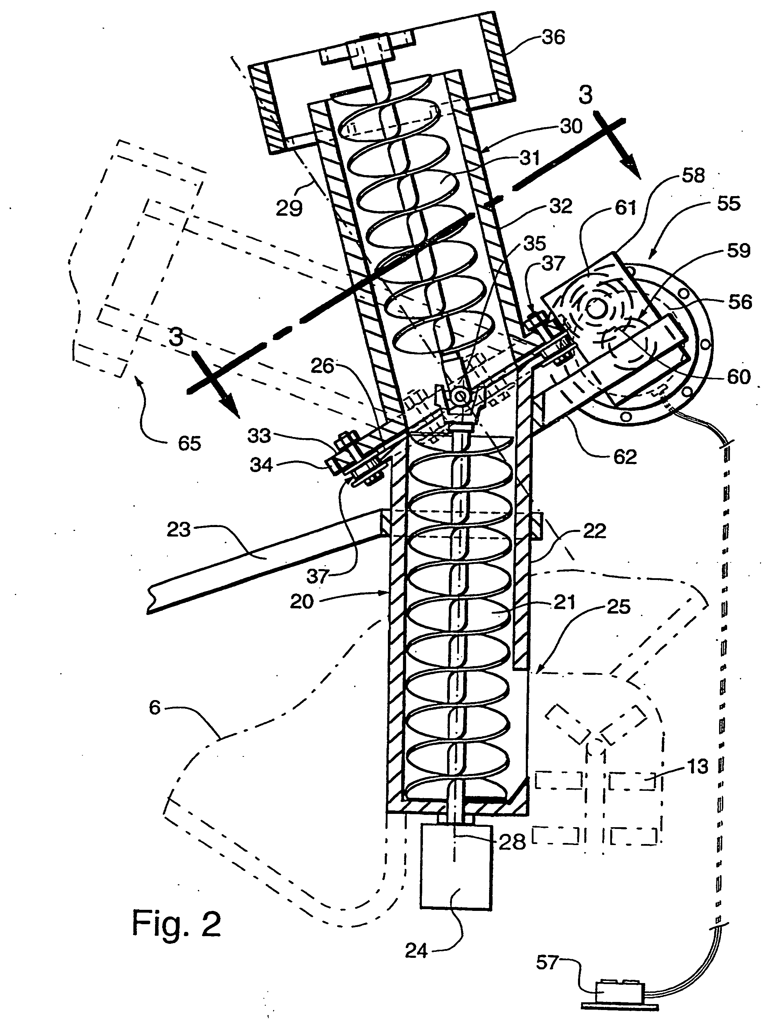

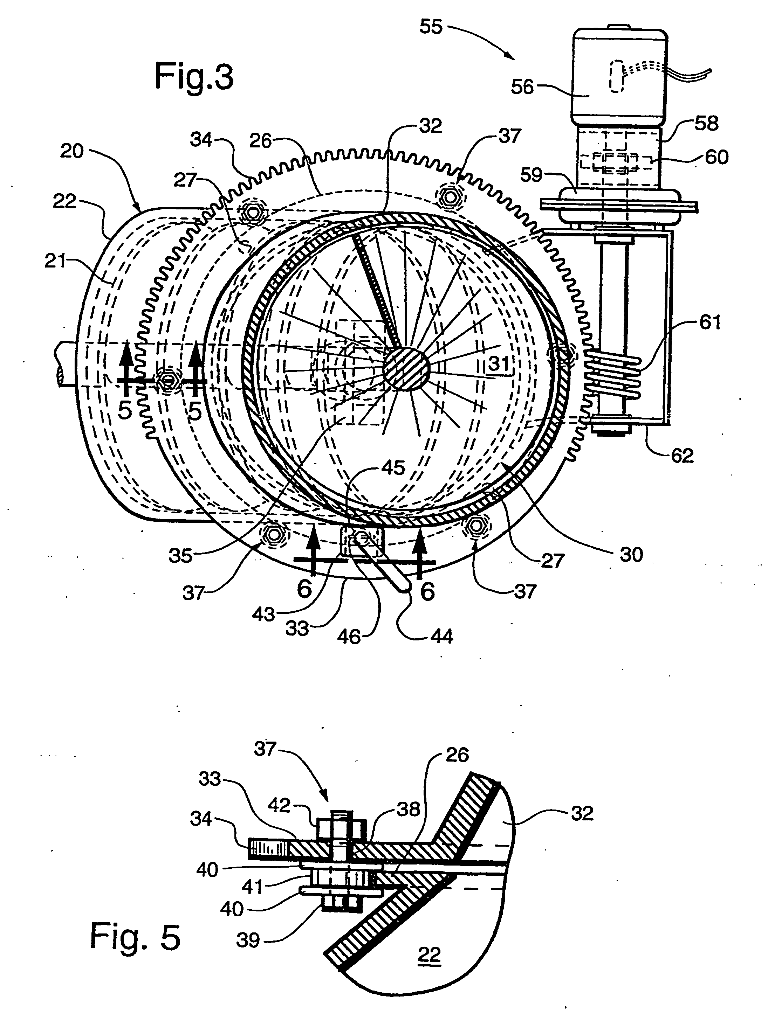

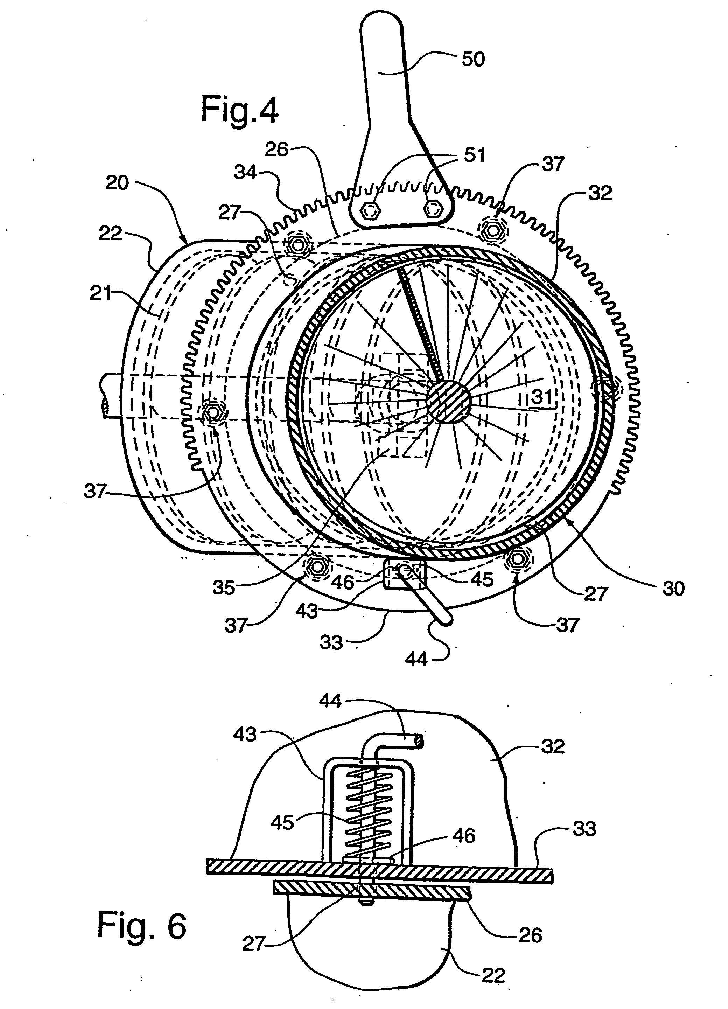

As previously indicated, the combine is provided with a turret system 10 for the combine's bubble-up auger. It consists of lower auger assembly 20 and rotationally attached upper auger assembly 30. The upper auger assembly 30 can be rotated relative to the lower assembly 10 by means of either a handle 50 (Figure 4) or an motor assembly 55 (Figure 3) to or from a transport position 65 (Figure 2).

The lower auger assembly 20 has lower auger shielding 22. Within the shielding 22 is the lower auger flighting 21. A lower auger gearbox 24 rotates the lower auger flighting 21 about a rotation axis 28. Typically grain exits at the top of the clean grain elevator 13, slides down the clean grain transition 25 and is lifted by the lower auger flighting 21. Attached to the lower auger shielding 22 is the lower auger collar 26. The collar 26 is oriented on an oblique plane relative to the axis of the cylindrically shaped auger shielding 22. The oblique plane intersects the auger shielding axis at a non-perpendicular angle. The collar 26 also has two diametrically opposed pin holes 27 (see Figures 3 and 4). The lower auger assembly 20 is held in a fixed position by a brace 23.

The upper auger assembly 30 has upper auger shielding 32 and upper auger flighting 31. The lower auger flighting 21 and upper auger flighting 31 are connected by a splined universal or U-joint 35 to allow for movement and misalignment. Attached to the upper auger shielding 32 is the upper auger collar 33. On the periphery of the upper auger collar 33 is a series of collar teeth 34. As like the lower auger collar 26, the upper auger collar 33 is oriented on an oblique plane relative to the shielding. On the surface of the collar 33 is the pin bracket 43. Attached at the top of the upper auger shielding 32 is the deflector 36.

The lower auger collar 26 and upper auger collar 33 are connected by a roller assembly 37 attached to the upper auger collar 33. The roller assembly 37 consists of a bolt 39 and several washers 40 inserted through a roller hole 38 on the upper auger collar 33 (see detail Figure 5). A roller 41 is held on the bolt by a nut 42. The roller 41 contacts and moves over the periphery of the lower auger collar 33. The nut 42 extends above the same periphery of the lower auger collar 26 to ensure alignment between the upper 33 and lower 26 auger collars. This turret system 10 allows for the rotation of the complete upper auger assembly 30 about an axis 29 which is perpendicular to the oblique plane of the auger collars 26 and 33 and lies in a plane through the rotation axis 28 of the lower flighting 21. Because of the orientation of the oblique plane, the turret rotation axis 29 intersects this lower rotation axis 28 at an obtuse angle.

To rotate the upper auger assembly 30 relative to the fixed lower assembly 20, there are several possible mechanisms. The least complex and primary embodiment, shown in Figure 4, uses a handle 50 affixed by a pair of bolts 51 to the upper auger collar 33. The operator pulls a pin 44 in the pin bracket 43 away from a pin hole 27 in the lower auger collar 26. Typically the pin 44 is biased by a spring 45 and spring pin 46 into a locked position. Once the pin 44 is removed from the pin hole 27, the operator is free to rotate the upper auger assembly 30 into any desirable position. There are at least two pin holes 27 in the lower auger collar 26 to facilitate proper alignment. In the present embodiment, the holes 27 are diametrically opposed to allow movement of the upper auger assembly 30 from an operating position to the transport position. The pin bracket 43 on the upper auger collar 33 and the pin holes 27 on the lower auger collar 26 typically will always be present because this lowers manufacturing costs and allows for emergency rotation of the upper auger assembly 30 in the event that the other rotation methods fail.

Another means for rotating the upper auger assembly 30 involves the use of an electric motor assembly 55. Basically, the electric motor drives a worm gear 61 that contacts the collar teeth 34 allowing for the upper auger assembly 30 to rotate. An electric motor 56 is controlled by a switch 57 positioned in the cab 2. A motor bracket 58 supports the electric motor 56. The motor 56 rotates a motor drive 59. The motion of the drive 59 is properly adjusted by a series of reduction gears 60. The reduction gear 60 drives the worm gear 61. The worm gear 61 meshes with the collar teeth 34 on the periphery of the upper auger collar 33. A worm gear support bracket 62 supports the worm gear 61. It is understood that a battery or common electric source powers the electric motor.

Because of the oblique angle of the upper collar 33 and lower auger collar 26, when the upper collar 33 rotates, the deflector end of the upper auger assembly 30 may be positioned to suit a variety of situations. During typical harvesting operations, it is desirable to position the top or deflector end 36 of the upper auger assembly 30 over the centre of the grain tank 6. While the harvester is being transported, the upper auger assembly 30 can be positioned to a transport position so that its axis is parallel to the horizon. Also because the lower auger assembly 20 remains fixed, the yield monitoring equipment available in many harvesters can be affixed to the lower auger shielding 22 without risk of movement impacting its calculations.

It will be obvious to those skilled in the art that various changes may be made without departing from the scope of the invention and the invention is not to be considered limited to what is illustrated in the drawings and described in the specification. For example, the upper auger assembly may be rotated by a hydraulic motor instead of the electric motor 56. The roller assembly 37 may also be affixed to the lower auger collar 26 and engage a smooth collar of the upper auger assembly 30. Where the lower auger assembly 20 has a non-vertical axis 28 and the axis of the upper auger assembly 30 extend at a non-perpendicular angle to the plane of its collar 33, the upper auger assembly 30 may equally be raised to its operative position by rotating this assembly 30 about an axis which coincides with the lower auger axis 28 This movement is realised where the lower auger collar 26 is perpendicular to the lower auger shielding 22.

## Claims

1. An agricultural harvesting machine comprising:
means (4) for processing crop collected from a field;
a tank (6) for intermediate storage of processed crop material; and
conveyor means (13, 25, 20, 10, 30) for conveying processed crop material from said processing means (4) to said tank (6);
said conveyor means comprising:
- a stationary lower auger assembly (20) comprising lower auger flighting (21) mounted for rotation inside lower auger shielding (22);
- a movable upper auger assembly (30) comprising upper auger flighting (31) mounted for rotation inside upper auger shielding (32) for discharging said processed crop material into said tank (6); and
- means (10) for rotating said upper auger assembly (30) relative to said lower auger assembly (20) about a rotation axis (29) that lies in a plane extending through the axis (28) of said lower auger flighting (21), said rotation axis (29) intersecting or coinciding with said lower flighting axis (28),
**characterised in that** said rotating means comprise a turret system (10) comprising:
a lower auger collar (26) affixed to said lower auger assembly (20); and
an upper auger collar (33) affixed to said upper auger assembly (30), proximate to said lower auger collar (26) and oriented in a plane that is perpendicular to said rotation axis (29) and oblique relative to the upper auger shielding (32).

2. An agricultural harvesting machine according to claim 1, **characterised in that** said conveyor means (13, 25, 20, 10, 30) further comprise an elevator (13) for conveying processed crop material from said processing means (4) to said lower auger assembly (20).

3. An agricultural harvesting machine according to claim 2, **characterised in that** said conveyor means (13, 25, 20, 10, 30) comprise a transition (25) for the passage of processed crop material from said elevator (13) to said lower auger assembly (20).

4. An agricultural harvesting machine according to claim 3, **characterised in that** said transition (25) or said lower auger assembly (20) is provided with a crop yield monitor.

5. An agricultural harvesting machine according to any of the preceding claims, **characterised in that** said turret system (10) further comprises:
a roller assembly (37) attached to one of said collars (26/33) for holding said collars proximate to each other and allowing the upper auger assembly (30) to rotate relative to the lower auger assembly (20).

6. An agricultural harvesting machine according to claim 5, **characterised in that** said roller assembly (37) comprises:
a bolt (39) affixed to said one collar (26/33); and
a roller (41) rotationally attached to said bolt (39) and secured by a nut (42), said roller being in slideable contact with the other of said collars (26/33).

7. An agricultural harvesting machine according to any of the preceding claims, **characterised in that** said conveyor means further comprise means (27, 43-46) for locking said upper auger assembly (30) in a fixed position to said lower auger assembly (20).

8. An agricultural harvesting machine according to claim 7, when appended to claim 5 or 6, **characterised in that** said locking means comprise a pin hole (27) in one of said auger collars (26/33), a pin bracket (43) affixed to the other of said collars (33/26), a pin (44) mounted to said bracket (43) and resilient means (45) for biasing said pin (44) to said pin hole (27).

9. An agricultural harvesting machine according to any of the preceding claims, **characterised in that** said rotating means comprise a handle (50) affixed to said upper auger assembly (30) for rotating said upper auger assembly.

10. An agricultural harvesting machine according to claim 5 or 6, **characterised in that**:
one of said collars (26/33) is provided with a plurality of gear teeth (34) positioned on the periphery of said one collar;
said rotating means (10) comprise a worm gear (61) in rotational contact with said gear teeth (34) and means (55) for rotating said worm gear (61).

11. An agricultural harvesting machine according to claim 10, **characterised in that** said worm gear rotating means (55) comprise a motor bracket (58) housing an electric motor (56), a switch means (57) electrically connected to said motor and a reduction gear (60) operably connected to said motor (56) and the worm gear (61).

12. An agricultural harvesting machine according to any of the preceding claims, **characterised in that** said lower auger assembly (20) extends into said tank (6) and said machine comprises a brace (23) attached to said tank (6) for supporting said lower auger assembly (20).

13. An agricultural harvesting machine according to any of the preceding claims, **characterised in that**:
said harvesting machine is a combine harvester (1);
said crop processing means comprise a threshing, separating and cleaning system (4); and
said conveyor means comprise a bubble-up auger assembly (20, 30).

## Patentansprüche

1. Landwirtschaftliche Erntemaschine mit:
Einrichtungen (4) zur Verarbeitung von von einem Feld gesammeltem Erntematerial;
einem Tank (6) zur Zwischenspeicherung von verarbeitetem Erntematerial; und
Fördereinrichtungen (13, 25, 20, 10, 30) zum Fördern von verarbeitetem Emtematerial von der Verarbeitungseinrichtung (4) zu dem Tank (6);
wobei die Fördereinrichtungen folgendes umfassen:
- eine stationäre untere Schneckenförderer-Baugruppe (20), die untere Förderschnecken-Schaufeln (21) umfasst, die für eine Drehung im Inneren eines unteren Förderschnecken-Rohres (22) befestigt sind;
- eine bewegliche obere Schneckenförderer-Baugruppe (30), die obere Förderschnecken-Schaufeln (31) umfasst, die für eine Drehung im Inneren eines oberen Förderschnecken-Rohres (32) befestigt sind, um das verarbeitete Emtematerial in den Tank (6) abzugeben; und
Einrichtungen (10) zum Drehen der oberen Schneckenförderer-Baugruppe (30) gegenüber der unteren Schneckenförderer-Baugruppe (20) um eine Drehachse (29), die in einer Ebene liegt, die sich durch die Achse (28) der unteren Förderschnecken-Schaufeln (21) erstreckt, wobei die Drehachse (29) die untere Förderschnecken-Schaufel-Achse (28) schneidet oder mit dieser zusammenfällt, **dadurch gekennzeichnet, dass** die Dreheinrichtungen ein Drehturmsystem (10) umfassen, das folgendes umfasst:
einen unteren Schneckenförderer-Flanschring (26), der an der unteren Schneckenförderer-Baugruppe (20) befestigt ist; und
einen oberen Schneckenförderer-Flanschring (33), der an der oberen Schneckenförderer-Baugruppe (30) in der Nähe des unteren Schneckenförderer-Flanschrings (26) befestigt ist und in einer Ebene ausgerichtet ist, die senkrecht zu der Drehachse (29) und schräg zu dem oberen Förderschneckenrohr (32) ist.

2. Landwirtschaftliche Erntemaschine nach Anspruch 1, **dadurch gekennzeichnet, dass** die Fördereinrichtungen (13, 25, 20, 10, 30) weiterhin einen Höhenförderer (13) zum Fördern von verarbeitetem Emtematerial von den Verarbeitungseinrichtungen (4) an die untere Schneckenförderer-Baugruppe (20) umfassen.

3. Landwirtschaftliche Erntemaschine nach Anspruch 2, **dadurch gekennzeichnet, dass** die Fördereinrichtungen (13, 25, 20, 10, 30) einen Übergang (25) für den Durchlauf des verarbeiteten Erntematerials von dem Höhenförderer (13) zu der unteren Schneckenförderer-Baugruppe (20) umfassen.

4. Landwirtschaftliche Erntemaschine nach Anspruch 3, **dadurch gekennzeichnet, dass** der Übergang (25) oder die untere Schneckenförderer-Baugruppe (20) mit einer Emteertrag-Überwachungseinrichtung versehen ist.

5. Landwirtschaftliche Erntemaschine nach einem der vorhergehenden Ansprüche, **dadurch gekennzeichnet, dass** das Drehturm-System (10) weiterhin folgendes umfasst:
eine Rollen-Baugruppe (37), die an einem der Flanschringe (26/33) angebracht ist, um die Flanschringe nahe aneinander zu halten und eine Drehung der oberen Schneckenförderer-Baugruppe (30) gegenüber der unteren Schneckenförderer-Baugruppe (20) zu ermöglichen.

6. Landwirtschaftliche Erntemaschine nach Anspruch 5, **dadurch gekennzeichnet, dass** die Rollen-Baugruppe (37) folgendes umfasst:
eine Schraube (39), die an dem einen Flanschring (26/33) befestigt ist; und
eine Rolle (41), die drehbar an der Schraube (39) befestigt und durch eine Mutter (42) gesichert ist, wobei die Rolle in Gleitberührung mit dem anderen der Flanschringe (26/33) steht.

7. Landwirtschaftliche Erntemaschine nach einem der vorhergehenden Ansprüche, **dadurch gekennzeichnet, dass** die Fördereinrichtungen weiterhin Einrichtungen (27, 43 bis 46) zum Verriegeln der oberen Schneckenförderer-Baugruppe (30) in einer festen Position gegenüber der unteren Schneckenförderer-Baugruppe (20) umfassen.

8. Landwirtschaftliche Erntemaschine nach Anspruch 7, unter Rückbeziehung auf Anspruch 5 oder 6, **dadurch gekennzeichnet, dass** die Verriegelungseinrichtungen eine Bolzen-Bohrung (27) in einem der Schneckenförderer-Flanschringe (26/33), einen Bolzen-Haltebügel (43), der an dem anderen der Flanschringe (33/26) befestigt ist, einen Bolzen (44), der an dem Haltebügel (43) befestigt ist, und elastische Einrichtungen (45) zum Vorspannen des Bolzens (44) in die Bolzen-Bohrung (27) umfassen.

9. Landwirtschaftliche Erntemaschine nach einem der vorhergehenden Ansprüche, **dadurch gekennzeichnet, dass** die Dreheinrichtungen einen Handgriff (50) umfassen, der an der oberen Schneckenförderer-Baugruppe (30) angebracht ist, um die obere Schneckenförderer-Baugruppe zu drehen.

10. Landwirtschaftliche Erntemaschine nach Anspruch 5 oder 6, **dadurch gekennzeichnet, dass**:
einer der Flanschringe (26/33) mit einer Vielzahl von Zahnradzähnen (34) versehen ist, die am Umfang des einen Flanschrings angeordnet sind;
die Dreheinrichtungen (10) eine Antriebsschnecke (61) in Drehberührung mit den Zahnradzähnen (34) und Einrichtungen (55) zum Drehantrieb der Antriebsschnecke (61) umfassen.

11. Landwirtschaftliche Erntemaschine nach Anspruch 10, **dadurch gekennzeichnet, dass** die die Antriebsschnecke in Drehung versetzenden Einrichtungen (55) einen einen Elektromotor (56) aufnehmenden Motorhaltebügel (58), eine Schalteinrichtung (57), die elektrisch mit dem Motor verbunden ist, und ein Untersetzungsgetriebe (60) umfassen, das betriebsmäßig mit dem Motor (56) und dem Schneckenzahnrad (61) verbunden ist.

12. Landwirtschaftliche Erntemaschine nach einem der vorhergehenden Ansprüche, **dadurch gekennzeichnet, dass** die untere Schneckenförderer-Baugruppe (20) sich in den Tank (6) erstreckt und die Maschine einen Haltebügel (23) umfasst, der an dem Tank (6) befestigt ist, um die untere Schneckenförderer-Baugruppe (20) zu haltern.

13. Landwirtschaftliche Erntemaschine nach einem der vorhergehenden Ansprüche, **dadurch gekennzeichnet, dass**:
die Erntemaschine ein Mähdrescher (1) ist;
die Erntematerial-Verarbeitungseinrichtungen ein Dresch-, Trenn- und Reinigungssystem (4) umfassen; und
die Fördereinrichtungen eine aufsteigende Schneckenförderer-Baugruppe (20, 30) umfassen.

## Revendications

1. Moissonneuse agricole comprenant:
un moyen (4) pour traiter le matériau de récolte moissonné du champ;
un réservoir (6) pour entreposer provisoirement le matériau de récolte traité; et
des moyens de transport (13, 25, 20, 10, 30) pour transporter le matériau de récolte traité dudit moyen de traitement (4) vers ledit réservoir (6);
les moyens de transport comprenant:
- un assemblage de vis inférieure stationnaire (20), comprenant une hélice de vis inférieure (21) montée en rotation à l'intérieur de la protection de vis inférieure (22);
- un assemblage de vis supérieure (30) amovible, comprenant une hélice de vis supérieure (31), montée en rotation à l'intérieur de la protection de vis supérieure (32) afin de déverser ledit matériau de récolte traité dans ledit réservoir (6); et
- des moyens (10) pour faire pivoter ledit assemblage de vis supérieure (30) par rapport audit assemblage de vis inférieure (20) autour d'un axe de pivotement (29) situé dans un plan passant par l'axe (28) de ladite hélice de vis inférieure (21), ledit axe de rotation (29) recoupant ledit axe d'hélice inférieure (28) ou coïncidant avec lui,
**caractérisée en ce que** lesdits moyens de rotation (10) comprennent un système de tourelle comportant:
un collier de vis inférieure (26) fixé audit assemblage de vis inférieure (20); et
un collier de vis supérieure (33) fixé audit assemblage de vis supérieure (30), proche dudit collier de vis inférieure (26) et orienté dans un plan perpendiculaire audit axe de rotation (29), et oblique par rapport à la protection de vis supérieure (32).

2. Moissonneuse agricole selon la revendication 1, **caractérisée en ce que** lesdits moyens de transport (13, 25, 20, 10, 30) comprennent en outre un élévateur (13) pour transporter le matériau de récolte traité dudit moyen de traitement (4) vers ledit assemblage de vis inférieure (20).

3. Moissonneuse agricole selon la revendication 2, **caractérisée en ce que** lesdits moyens de transport (13, 25, 20, 10, 30) comprennent une zone de transition (25) pour le passage de matériau de récolte traité dudit élévateur (13) vers ledit assemblage de vis inférieure (20).

4. Moissonneuse agricole selon la revendication 3, **caractérisée en ce que** ladite zone de transition (25) ou ledit assemblage de vis inférieure (20) est pourvu d'un moniteur de production de matériau de récolte.

5. Moissonneuse agricole selon l'une quelconque des revendications précédentes, **caractérisée en ce que** ledit système de tourelle (10) comprend en outre:
un assemblage à galets (37) fixé à l'un desdits colliers (26/33) pour maintenir lesdits colliers proches l'un de l'autre et permettre à l'assemblage de vis supérieure (30) de pivoter par rapport à l'assemblage de vis inférieure (20).

6. Moissonneuse agricole selon la revendication 5, **caractérisée en ce que** ledit assemblage à galets (37) comprend:
un boulon (39) fixé audit un collier (26/33); et
un galet (41) fixé rotativement audit boulon (39) et maintenu par un écrou (42), ledit galet étant en contact coulissant avec l'autre desdits colliers (26/33).

7. Moissonneuse agricole selon l'une quelconque des revendications précédentes, **caractérisée en ce que** lesdits moyens de transport comprennent en outre des moyens (27, 43-46) pour verrouiller ledit assemblage de vis supérieure (30) dans une position fixe par rapport audit assemblage de vis inférieure (20).

8. Moissonneuse agricole selon la revendication 7, qui lorsqu'elle dépend de la revendication 5 ou 6, est **caractérisée en ce que** lesdits moyens de verrouillage comportent un trou de broche (27) dans l'un desdits colliers de vis (26/33), un support de broche (43) fixé à l'autre desdits colliers (33/26), une broche (44) montée audit support (43) et un moyen élastique (45) pour contraindre ladite broche (44) vers ledit trou de broche (27).

9. Moissonneuse agricole selon l'une quelconque des revendications précédentes, **caractérisée en ce que** lesdits moyens de rotation comprennent une poignée (50) fixée audit assemblage de vis supérieure (30) pour faire tourner ledit assemblage de vis supérieure.

10. Moissonneuse agricole selon la revendication 5 ou 6, **caractérisée en ce que**:
l'un desdits colliers (26/33) est pourvu d'une pluralité de dents d'engrenage (34) positionnées sur la périphérie de cedit collier;
lesdits moyens de rotation (10) comprennent un engrenage de vis sans fin (61) en contact rotationnel avec lesdites dents d'engrenage (34) et les moyens (55) pour faire tourner ledit engrenage de vis sans fin (61).

11. Moissonneuse agricole selon la revendication 10, **caractérisée en ce que** lesdits moyens de rotation d'engrenage de vis sans fin (55) comprennent une console de moteur (58) abritant un moteur électrique (56), un moyen de commutation (57) raccordé électriquement audit moteur et un engrenage de reduction (60) raccordé opérationnellement audit moteur (56) et à l'engrenage de vis sans fin (61).

12. Moissonneuse agricole selon l'une quelconque des revendications précédentes, **caractérisée en ce que** ledit assemblage de vis inférieure (20) s'étend dans ledit réservoir (6), et ladite machine comprend une armature (23) fixée audit réservoir (6) pour supporter ledit assemblage de vis inférieure (20).

13. Moissonneuse agricole selon l'une quelconque des revendications précédentes, **caractérisée en ce que**:
ladite moissonneuse est une moissonneuse-batteuse (1);
lesdits moyens de traitement de matériau de récolte comprennent un système de battage, de séparation et de nettoyage (4); et
lesdits moyens de transport comprennent un assemblage de vis à jaillissement (20, 30).
